# EUROPEAN PATENT SPECIFICATION

(11) **EP 3 975 351 B1**
(45) Date of publication and mention of the grant of the patent: **04.11.2026**
(21) Application number: 19929395.2
(22) Date of filing: 22.05.2019
(51) Int. Cl.: H02K 13/00, H01R 39/42, H01R 39/38

(54) **LIFTABLE BRUSH HOLDER SYSTEM ABLE TO OPERATE STATICALLY AND CORRESPONDING ROTARY ELECTRIC MACHINE**
HÖHENVERSTELLBARES BÜRSTENHALTERSYSTEM FÜR STATISCHEN BETRIEB UND ENTSPRECHENDE ELEKTRISCHE DREHMASCHINE
SYSTÈME DE PORTE-BALAIS À ÉLÉVATION APTE À FONCTIONNER COMME ÉLÉMENT FIXE ET MACHINE ÉLECTRIQUE TOURNANTE CORRESPONDANTE

(43) Date of publication of application: 30.03.2022
(73) Proprietor: Weg Equipamentos Electricos S.A., 89256-900 Jaragua do Sul - SC (BR)
(72) Inventor: LUIS PINTER, Cesar, 89253-425 Jaragua do Sul (BR); SACHT, Nilson, 89257-530 Jaragua do Sul (BR); EMMANUELE GRACINSKI, Alini, 89258-550 Jaragua do Sul (BR)
(74) Representative: Schmid, Nils T.F.
(86) International application number: PCT/BR2019/050187
(87) International publication number: WO 2020/232516

(56) References cited:
- EP-A1- 0 858 148
- EP-B1- 0 858 149
- JP-A- S50 151 308
- JP-U- S5 686 873
- JP-Y1- S4 529 137
- US-A- 1 392 193
- US-A1- 2012 169 176
- US-B2- 8 558 429
- US-B2- 8 674 581

## Description

### Field of application

The present invention belongs to the field of brush holder systems applied to three-phase alternating current motors, in particular to liftable brush systems and fixed brush systems, notably to the elements that constitute such systems.

### Background of the invention

Brush holders, together with slip rings, are applied to three-phase alternating current motors, commercially known as slip ring motors or wound rotor motors. They are normally used in applications that require high starting torque or in cases where there is a limitation of the starting current in the supply system. For applications that present variable torque during operation, the motor is equipped with a fixed brush holder system, whereas in applications that require high torque only for starting, the motor is equipped with a liftable brush holder system.

In both systems there is the brush holder and slip ring set, which is responsible for linking the static part (rheostat) with the rotating part (rotor), the connection being made through the carbon brush.

### Prior art

Currently, there are motors on the market with two types of brush system, which can be fixed brushes or liftable brushes.

The fixed brush system is one in which the brushes remain in contact with the slip ring permanently under pressure by constant pressure springs. In this case, the brushes have a limited useful life (from 6 to 8 months) due to wear caused by the permanent contact of the brushes with the slip ring, thus representing an important disadvantage in terms of operating, material, and maintenance costs, as it demands periodically changing the brushes and cleaning the interior of the compartment that houses them, to eliminate dust from their wear.

The liftable brush system, on the other hand, is applied, for example, to motors that need high torque only for starting, wherein the brush application time is of a few seconds and, the rest of the time, the motors run as squirrel cage motors. The lifting system, in this case, is driven by means of a motorized device responsible for both brush lifting and short-circuit closing. When the motor reaches rated speed, the lifting system is driven, acting as follows: the lifting system is driven by a motor that, through a reducer, drives a shaft that moves an eccentric disc. This eccentric disc allows the system to perform both brush lifting and short-circuit closing. When the eccentric disk is moved, the arm is moved by the component, making the closing movement of the short-circuit bushing. After closing the short circuit, the brush lifting system is moved by the eccentric disc, but through the lifting ring, which will lift the brushes. When the brushes are lifted, they lose contact with the slip ring, preventing wear. In this type of solution, the brushes have a useful life of approximately 10 years and need cleaning at longer intervals, for example, every 6 months.

The disadvantage of such a liftable brush system found on the market, however, is that it does not allow the work as a fixed brush system, since they use variable pressure springs. In the case of variable pressure springs, the pressure varies according to the elongation of the spring, which cannot occur in a fixed brushes system, in which the spring pressure control on the brush is fundamental for its performance and pressure variations must not be above 15% between brushes of the same phase. In addition, the state of the art does not foresee the possibility of variation in the number of brushes, much less that it occurs remotely, according to the load conditions of the motor operation.

An example of prior art liftable brush systems in the nature discussed herein is US Patent Document No. US20120169178, which discloses and describes systems, methods, and devices for short-circuit slip rings of induction motors. Said system comprises a shaft in operational communication with an induction motor shaft, several slip rings radially positioned around the shaft and in electrical communication with the rotor windings, in addition to multiple brushes adapted for selective contact with one or more of the slip rings. In addition, the system may include multiple selective activation electrical contacts in electrical communication with the respective motor rotor winding terminals and a drive mechanism in operational communication with the brushes and the electrical contacts.

According to the aforementioned document US20120169178, the eccentric slot (160) serves as a positioner for the complete set (it is impossible to use only one side of the structure, that is, it is impossible to vary the number of brushes in action, much less remotely) in addition to lifting the brushes (130), however, the system works with independent mechanisms connected by current, where loss of connection may happen, either by detachment or breakage of the current. Apparently, the system does not have sensors to indicate each independent mechanical part, being possible to generate failure in the operation. Operation in fixed mode is not possible either due to the use of the concept of variable pressure springs (320) in the system.

Therefore, it is concluded that currently the market lacks the option of a motor equipped with both brush systems (liftable and fixed) and that allows the user/customer to purchase a single reserve motor for two different applications. For this reason, with the options presented above, it is necessary to purchase two motors, each equipped with a different type of brush system. Furthermore, it is impossible to vary the number of brushes in action in the same fixed brush system.

Therefore, as can be inferred from the above description, there is room for a liftable brush system that works with a constant pressure spring and that allows the use as a fixed brush system, overcoming the disadvantages of the prior art of conventional lifting systems.

JPS 50151308 A discloses a secondary short-ciruited induction. EP 0 858 148 A1 discloses an arrangement for disconnection of the rheostat starting means of a slip-ring asynchronous motor, and motor provided with such an arrangement. JPS 5686873 U discloses an AC motor with a slip ring inside a rolling machine such as a winding type visiting dragon motor, wherein it is possible to control the number of sliding contacts of a brush sliding on the slip ring to an AC electric motor.

### Objectives of the invention

One of the objects of the present invention is, therefore, to provide a brush lifting system that overcomes the deficiencies of the prior art, in particular, providing a solution (i) of simplified construction and reduced number of components, (ii) that enables the operation with only one side of the brush holder, optimizing compartment cleaning time and material consumption; (iii) able to provide the customer with the option of obtaining only one spare motor for two different applications; (iv) which enables the operation of the motor with a fixed system, in case of failure of any component of the lifting system; and enables the operation as fixed brushes with the possibility of remote brush variation.

Another objective of the present invention is to provide a rotating electrical machine equipped with a corresponding brush lifting system.

### Brief description of the figures

For better understanding and visualization of the object of the present invention, the same will now be described with reference to the attached drawings, representing the technical effect obtained by means of an exemplary embodiment not limiting the scope of the present invention, wherein, schematically:

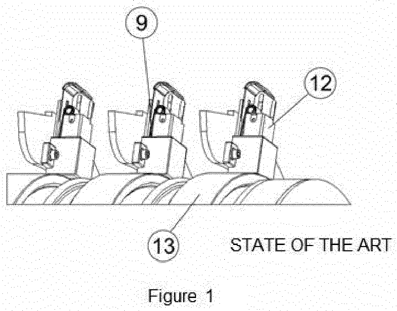

Figure 1 shows a view of the connection between static part and rotating part of a prior art brush system;

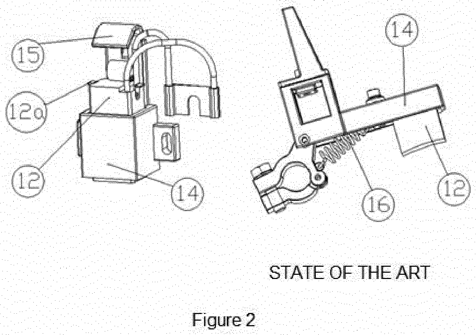

Figure 2 shows a front view of the constant pressure spring and a side view of the variable pressure spring of a prior art brush system;

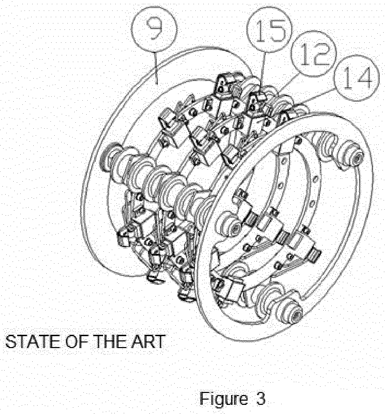

Figure 3 shows a view of a fixed brush holder system, with constant pressure springs of a prior art brush system;

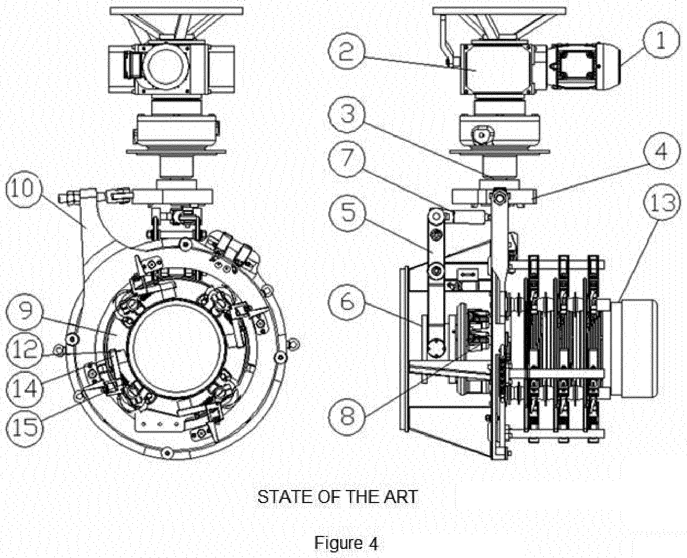

Figure 4 shows front and side views of the typical variable pressure spring lifting system design of a prior art brush system;

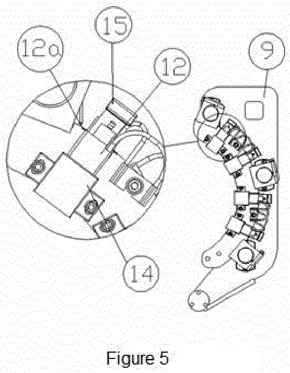

Figure 5 shows a front view of an enlarged detail of the lifting system with constant pressure spring according to the invention;

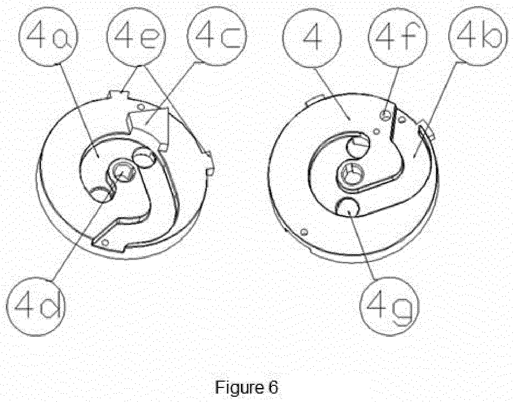

Figure 6 shows an upper side view and an underside view of the lifting disc with eccentric slot according to the invention;

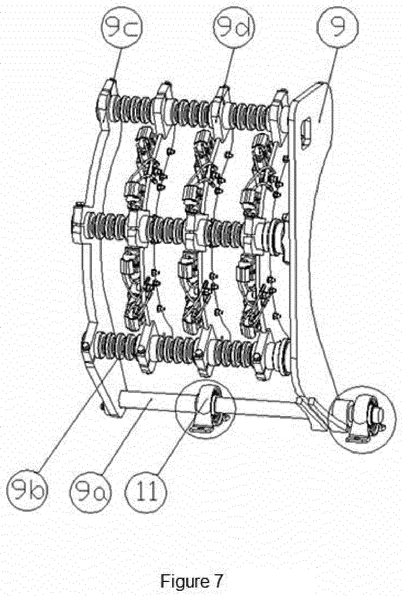

Figure 7 shows an isometric view of a system according to the invention, showing a bearing unit for articulating the brush holder;

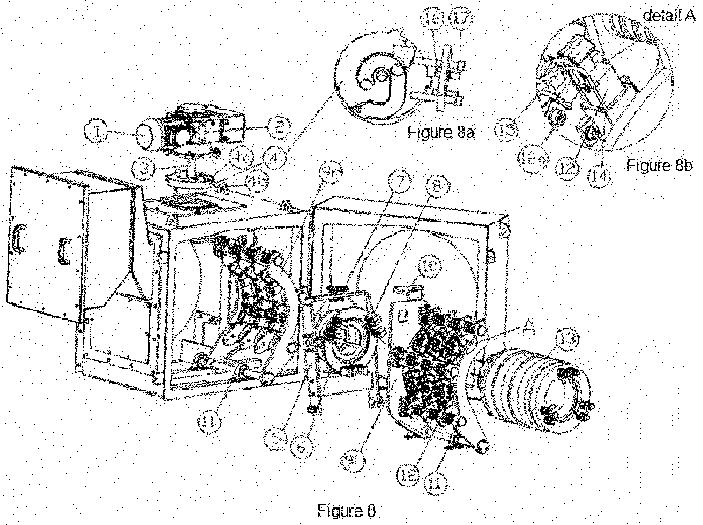

Figure 8 shows an isometric perspective view of a system according to the invention;
Figure 8a shows an enlarged view of the disc with eccentric slot, the inductive sensor, and the mechanical stop of figure 8; and
Figure 8b shows an enlarged view of detail A in figure 8.

### Detailed description of the invention

The present invention refers to a liftable brush holder system able to function as fixed. It consists of a motor (1) that drives a speed reducer (2), this driving a shaft (3) that moves a disc with eccentric slot (4).

The disc with eccentric slot (4) is responsible for moving both sides of the brush holder (9) independently and by the closing the short-circuit bushing (6).

The disc with eccentric slot (4) has two slots (4a, 4b), arranged on opposite sides of the disc with eccentric slot (4) and offset by 160° to 200°, preferably by 180°, having eccentricity in the slot (4a, 4b) of 48mm between the inner radius and the outer radius, with 60% of the movement being carried out in the inner radius and 30% between the path between the inner/outer radius and 10% in the outer radius, in order to ensure that the short-circuit system (8) remains closed when lowering or lifting the brushes (12), in addition to having a working angle of 220° to 300°, preferably 260° between the same lowering and lifting of the brushes (12), the left side brush holder (9l) being connected in the upper slot (4a) and the right side brush holder (9r) being connected to the bottom slot (4b), and in some cases only one arm (9r or 9l) can be connected to the disc with eccentric slot (4), either by the presence of only one arm (9r or 9l) in the lifting system or as a way of varying the number of brushes (12) in the fixed system, where two arms (9r and 9l) are present, but only one connected to the disc with eccentric slot (4).

The disc with eccentric slot (4) has two drain points (4g) to purge any unwanted material that may deposit in the eccentric slot (4a, 4b).

In addition to the features mentioned above, the eccentric disc (4) has two protrusions (4e) that have the function of driving the inductive sensors (16) which, in turn, indicate the end of the lowering or lifting stroke of the brushes (12), sending a signal to the external panel for motor shutdown (1). In case the system is blocked in the middle of the course and the end-of-stroke sensors are not driven, an external protection to the system switches off the same motor through a timer or motor circuit breaker. In addition to the sensors, there is a mechanical end-of-stroke system (4c) present only at the top of the disc with eccentric slot (4) which, together with the mechanical stop screws (17), has the function of stopping the system in case of failure of inductive sensors (16).

The disc with eccentric slot (4) is driven through the fixing location of the drive shaft (4d) and the drive shaft (3). The disc with eccentric slot (4) has a place for fixing the intermediate shaft (4f) which has the function of moving the bushing movement arm (5) and, consequently, the short-circuit contact (8).

For lifting the brushes (12), one side of the brush holder (9) is connected by means of the intermediate arm (10) to the upper eccentric slot (4a) and the other side of the brush holder (9) is connected to the lower eccentric slot (4b) of the disc with eccentric slot (4).

In order to move the short-circuit bushing (6), the intermediate shaft (7) is connected to the disc with eccentric slot (4), and the intermediate shaft (7) is connected to the moving arm (5) of the short-circuit bushing (6), moving it. Then, when the disc with eccentric slot (4) rotates, the closing movement of the short-circuit bushing (6) and then the lifting of the brushes (12) are carried out, in that order. The bearing units (11) present at the base on each side of the brush holder (9) allow the system to be safely articulated during the rotation of the disc with eccentric slot (4).

Because each side of the brush holder (9) is connected to the disc with eccentric slot (4) in different positions and the articulation of the bearing units (11) on each side is independent, it is possible to use only one side of the brush holder (9) when the system requires half or less of the rated capacity of brushes of each system size, without prejudice to its functioning.

For this system to operate correctly, the brushes (12) must have a stop (12a), so that, when the brushes (12) are lifted, they touch the brush holder (14) and do not remain in contact with the slip ring (13).

In this type of solution, operating with the lifting system according to the invention, the brushes (12) have a useful life of approximately 10 years.

For the system to operate as a fixed brush holder, it is not necessary any intervention in the system, just keep the brushes in contact with the slip ring and deactivate the driving system.

The constant pressure spring (15) and brush (12) set will ensure the correct performance of the brushes (12). When the system works with the brushes (12) down, the short-circuit bushing (6) will be open during the entire motor operation.

That said, the important advantage that the present invention brings in relation to the state of the art remains evident, namely: that of providing a brush holder lifting system (9) equipped with a constant pressure spring (15) and able to work as a fixed brush holder system (9). In this sense, the creation of the concept using constant pressure springs (15) in the lifting system, the lifting disc (4) with eccentric slot (4a/4a) and the articulation shape of the brush holder (11) are fundamental for enabling the operation with fixed brushes (12), wherein the disc with eccentric slot (4) allows the lifting of the brushes (12) and also maintains the position when the brushes (12) are in the condition of contact with the slip ring (13) (fixed brushes).

In addition, the skilled person will understand that this concept creates a new product option available on the market, which has not been evidenced so far.

All the connections between the elements are mechanical and centered on the disc with eccentric slot (4), where the two sides of the brush holder (9) are independently connected, and only one half of the system can be used, the right side being connected to the lower part of the cam (4b) and the left side connected to the upper part (4a), in addition to the connection through the intermediate arm (7) with the movement arm of the short bushing (5), without the presence of pulleys or chains, each independent mechanical set being monitored by a pair of inductive sensors (totaling 8 internal sensors) that assess the correct positioning of each mechanism in addition to, in conjunction with a spring system with constant pressure (15), being able to operate both with a liftable system and as a fixed system. Another innovative element, for operation in fixed mode, is the possibility of operating the system with one moving arm and the other fixed arm, then being possible to vary the number of brushes (9) according to the load which the motor (1) is remotely operating with, ensuring the best performance of brushes (9) and slip rings (13). This artifice enables to increase the load range in which the motor can operate without the need for manual intervention for removal or addition of brushes (9).

The proposed solution, therefore, considerably reduces both the cost of parts for assembling the lifting system and the consumption of materials, if compared to those proposed by state-of-the-art lifting systems.

### Conclusion

As can be inferred from the above description, the brush holder lifting system able to operate as fixed, according to the present invention, overcomes the prior art solutions, being a system of practical use, perfectly susceptible to industrial application, endowed with novelty, involving an inventive act, and resulting in a smaller quantity of parts, less maintenance costs and longer lifetime of the brushes.

## Claims

1. A liftable brush holder system applicable to three-phase alternating current motors, the system being equipped with a constant pressure spring (15) thereby enabling to work also as a fixed brush holder system, comprising a motor (1) that drives a speed reducer (2) driving a shaft (3) that moves a disc with eccentric slots (4),
wherein the disc with eccentric slots (4) has two slots (4a, 4b) arranged on opposite sides and offset by 160° to 200°, preferably 180° therebetween,
wherein one side (9l) of the brush holder (9) is connected by means of an intermediate arm (10) to the upper eccentric slot (4a) and the other side (9r) of the brush holder (9) is connected to the lower eccentric slot (4b) of the disc with eccentric slot (4),
the system further comprising an intermediate shaft (7) connected to the disc with eccentric slots (4) and to a movement arm (5) of the short-circuit bushing (6) wherein the rotation of the disc with eccentric slots (4) sequentially promotes the closing movement of the short-circuit bushing (6) and then the lifting of the brushes (12).

2. The system of claim 1, **characterized in that** each side of the brush holder (9;, 9r) has bearing units (11) independent of each other.

3. The system of claim 1, **characterized in that** the brushes (12) arranged in the brush holder (9) are equipped with a stop (12a), so that when the brushes (12) are lifted they touch the brush support (14) and do not remain in contact with the slip ring (13).

4. The system of claim 1, **characterized in that** the short-circuit bushing (6) remains open during operation with the brushes (12) lowered.

5. Rotating electric machine, **characterized in that** it is equipped with a liftable brush holder system able to operate as fixed, according to any one of claims 1 to 4.

## Patentansprüche

1. Abhebbares Bürstenhaltersystem, anwendbar auf dreiphasige Wechselstrommotoren, wobei das System mit einer Konstantdruckfeder (15) ausgestattet ist, wodurch es auch als feststehendes Bürstenhaltersystem arbeiten kann, umfassend einen Motor (1), der einen Drehzahlminderer (2) antreibt, der eine Welle (3) antreibt, die eine Scheibe mit exzentrischen Schlitzen (4) bewegt,
wobei die Scheibe mit exzentrischen Schlitzen (4) zwei Schlitze (4a, 4b) aufweist, die auf gegenüberliegenden Seiten angeordnet und um 160° bis 200°, vorzugsweise 180°, zueinander versetzt sind,
wobei eine Seite (9l) des Bürstenhalters (9) mittels eines Zwischenarms (10) mit dem oberen exzentrischen Schlitz (4a) verbunden ist und die andere Seite (9r) des Bürstenhalters (9) mit dem unteren exzentrischen Schlitz (4b) der Scheibe mit exzentrischem Schlitz (4) verbunden ist,
wobei das System ferner eine Zwischenwelle (7) umfasst, die mit der Scheibe mit exzentrischen Schlitzen (4) und mit einem Bewegungsarm (5) der Kurzschlussbuchse (6) verbunden ist, wobei die Drehung der Scheibe mit exzentrischen Schlitzen (4) nacheinander die Schließbewegung der Kurzschlussbuchse (6) und dann das Abheben der Bürsten (12) bewirkt.

2. System nach Anspruch 1, **dadurch gekennzeichnet, dass** jede Seite des Bürstenhalters (9l, 9r) voneinander unabhängige Lagereinheiten (11) aufweist.

3. System nach Anspruch 1, **dadurch gekennzeichnet, dass** die im Bürstenhalter (9) angeordneten Bürsten (12) mit einem Anschlag (12a) ausgestattet sind, so dass die Bürsten (12) beim Abheben den Bürstenträger (14) berühren und nicht in Kontakt mit dem Schleifring (13) verbleiben.

4. System nach Anspruch 1, **dadurch gekennzeichnet, dass** die Kurzschlussbuchse (6) während des Betriebs mit abgesenkten Bürsten (12) geöffnet bleibt.

5. Rotierende elektrische Maschine, **dadurch gekennzeichnet, dass** sie mit einem abhebbaren Bürstenhaltersystem ausgestattet ist, das als feststehendes System arbeiten kann, nach einem der Ansprüche 1 bis 4.

## Revendications

1. Système porte-balais relevable, applicable à des moteurs triphasés à courant alternatif, le système étant équipé d'un ressort à pression constante (15), permettant ainsi de fonctionner également comme un système porte-balais fixe, comprenant un moteur (1) entraînant un réducteur de vitesse (2) entraînant un arbre (3) déplaçant un disque doté de fentes excentriques (4),
dans lequel le disque doté de fentes excentriques (4) comporte deux fentes (4a, 4b) agencées sur des côtés opposés et décalées de 160° à 200°, de préférence de 180° l'une par rapport à l'autre,
dans lequel un côté (9l) du porte-balais (9) est relié à la fente excentrique supérieure (4a) au moyen d'un bras intermédiaire (10) et l'autre côté (9r) du porte-balais (9) est relié à la fente excentrique inférieure (4b) du disque doté de fentes excentriques (4),
le système comprenant en outre un arbre intermédiaire (7) relié au disque doté de fentes excentriques (4) et à un bras mobile (5) de la bague de court-circuit (6), dans lequel la rotation du disque doté de fentes excentriques (4) favorise séquentiellement le mouvement de fermeture de la bague de court-circuit (6) et ensuite le levage des balais (12).

2. Système selon la revendication 1, **caractérisé en ce que** chaque côté du porte-balais (9l, 9r) comporte des unités de palier (11) indépendantes les unes des autres.

3. Système selon la revendication 1, **caractérisé en ce que** les balais (12) agencés dans le porte-balais (9) sont équipés d'une butée (12a), de sorte que lorsque les balais (12) sont relevés, ils touchent le support de balais (14) et ne restent pas en contact avec la bague collectrice (13).

4. Système selon la revendication 1, **caractérisé en ce que** la bague de court-circuit (6) reste ouverte pendant le fonctionnement avec les balais (12) abaissés.

5. Machine électrique rotative, **caractérisée en ce qu'**elle est équipée d'un système de porte-balais relevable capable de fonctionner comme un système fixe, selon l'une quelconque des revendications 1 à 4.
